(19) Europäisches Patentamt / European Patent Office / Office européen des brevets

(11) **EP 1 604 447 B1**

(12) **FASCICULE DE BREVET EUROPÉEN**

(45) Date de publication et mention
de la délivrance du brevet:
**25.04.2007 Bulletin 2007/17**

(21) Numéro de dépôt: **04702730.5**

(22) Date de dépôt: **16.01.2004**

(51) Int Cl.:
*H02M 3/158* *(2006.01)*     *H02M 3/07* *(2006.01)*

(86) Numéro de dépôt international:
**PCT/FR2004/000091**

(87) Numéro de publication internationale:
**WO 2004/093305 (28.10.2004 Gazette 2004/44)**

(54) **HACHEUR SERIE A COMMUTATION SYNCHRONE ET FAIBLES PERTES**

IN REIHE GESCHALTETER VERLUSTARMER SYNCHRON SCHALTBARER SPANNUNGS-CHOPPER

SERIAL CONNECTED LOW-LOSS SYNCHRONOUSLY SWITCHABLE VOLTAGE CHOPPER

(84) Etats contractants désignés:
**BE DE FR GB**

(30) Priorité: **18.03.2003 FR 0303305**

(43) Date de publication de la demande:
**14.12.2005 Bulletin 2005/50**

(73) Titulaire: **Thales**
**92526 Neuilly-sur-Seine Cédex (FR)**

(72) Inventeur: **TAURAND, Christophe,**
**Thales Intellectual Property**
**94117 Arcueil Cedex (FR)**

(74) Mandataire: **Beylot, Jacques**
**Marks & Clerk France**
**31-33 Avenue Aristide Briand**
**94117 Arcueil Cédex (FR)**

(56) Documents cités:
**US-A- 5 357 419        US-A1- 2002 121 881**
**US-B1- 6 304 065**

• **PATENT ABSTRACTS OF JAPAN vol. 016, no. 018 (E-1155), 17 janvier 1992 (1992-01-17) & JP 03 235657 A (SUMITOMO METAL IND LTD), 21 octobre 1991 (1991-10-21)**

## Description

L'invention concerne un hacheur série ou « buck converter » en langue anglaise, permettant d'obtenir, à partir d'une tension continue d'alimentation, une autre tension continue de plus faible valeur.

Les nouveaux composants électroniques sont alimentés avec des tensions de plus en plus faibles (2.5V, 1.8V actuellement et probablement 1.2V et 0.8V bientôt), les besoins en puissance vers les très basses tensions augmentent et deviennent majoritaires par rapport aux tensions classiques +/-15V et +5V.

Les courants consommés deviennent de plus en plus importants car la puissance consommée par les utilisateurs est toujours la même ou augmente (fonctionnalités plus nombreuses).

Les tensions inférieures à 3.3V ne sont pas distribuées et sont implantées directement sur les cartes utilisatrices. L'alimentation se déporte au plus proche des utilisateurs.

Cette tendance oblige les fournisseurs d'alimentations à réaliser des convertisseurs générant des rapports entre tension d'entrée et tension de sortie de plus en plus importants.

Les structures utilisées sont généralement des convertisseurs à découpage non isolés pour conserver des rendements élevés et des convertisseurs de faibles dimensions. Ces convertisseurs peuvent difficilement faire, avec une structure de type abaisseur, un rapport de transformation supérieur à 10 avec des rendements supérieurs à 90%.

Pour permettre au marché de remplir ses exigences d'intégration, il faut pouvoir fournir ces nouveaux convertisseurs dans des surfaces toujours plus petites et donc avec des rendements de plus en plus importants pour ne pas augmenter la taille des dissipateurs.

Parmi les structures des convertisseurs on trouve les hacheurs série ou « buck converter ».

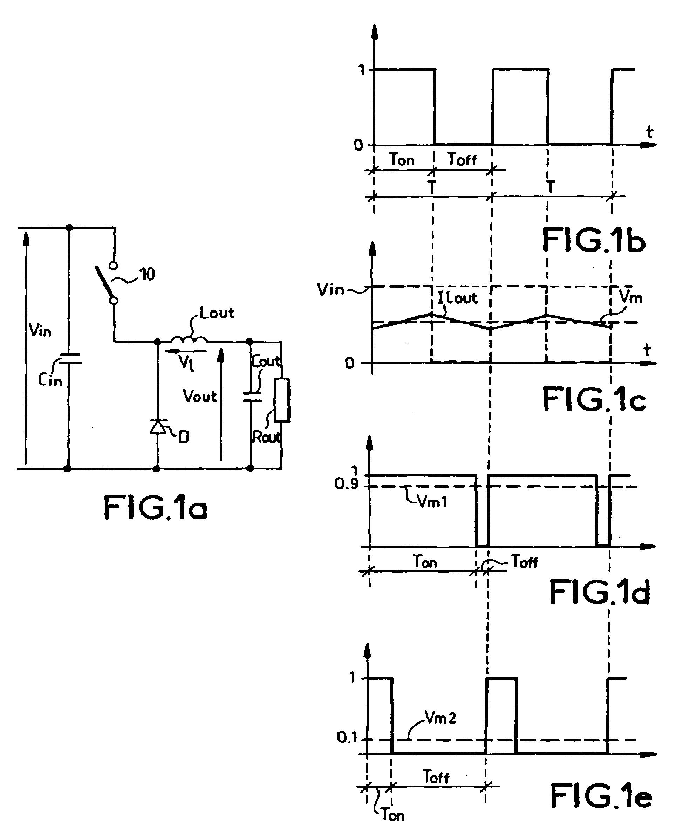

La figure 1a montre un schéma de principe d'un « buck converter ».

Le circuit de la figure 1a, est alimenté par une tension continue d'entrée Vin et fournit une tension de sortie Vout sur une charge Rout en parallèle avec une capacité Cout. Un commutateur 10 permet d'appliquer à une borne d'une self de sortie Lout connectée par son autre borne à une des bornes de la résistance de charge Rout, soit le potentiel positif de la tension d'entrée Vin soit le potentiel négatif pendant des temps respectifs Ton et Toff. La figure 1b montre les temps de fermeture Ton et d'ouverture Toff de l'interrupteur 10. L'autre borne de la résistance de charge Rout est connectée au potentiel négatif de la tension d'entrée Vin. On supposera par la suite que le potentiel négatif de Vin est 0 volt.

Les diagrammes des figures 1c, 1d et 1e montrent le principe de fonctionnement du « buck converter ».

On suppose que le commutateur 10 est commuté avec une fréquence de période T, avec T=Ton+Toff (voir figure 1C). La période T peut être de valeur constante ou variable.

La tension Vl aux bornes de la self Lout est :

Vl = Vin -Vout, pendant le temps Ton et

Vl = - Vout, pendant le temps Toff

La tension moyenne Vm de la tension de sortie Vout aux bornes de la résistance Rout sera donc comprise entre Vin et 0 volt en fonction du rapport cyclique Toff/T et sera donnée par Vm = (Ton/T).Vin.

La tension Vout est constante au niveau de sa valeur moyenne Vm. Le courant Ilout dans la self Lout se présentant sous forme de rampes pendant les temps Ton et Toff. Une diode D assure la continuité du courant dans la self lors des commutations.

Dans le diagramme de la figure 1c on a représenté Ton =T/2 et par conséquent Vout = Vin/2.

Les diagrammes des figures 1d et 1e montrent respectivement deux valeurs de tension moyenne Vm1 et Vm2 aux bornes de la résistance de charge Rout pour deux valeurs du temps Ton :

- dans le diagramme de la figure 1d : Ton/T = 0,9 et,
- dans le diagramme de la figure 1e : Ton/T = 0,1.

En d'autres termes, lorsque Ton/T est faible, l'énergie fournie par la source d'alimentation, pendant le court instant Ton, est faible, produisant une faible tension moyenne aux bornes de la charge, à contrario, lorsque Ton est proche de la période T la charge est quasi-constamment connectée à la source d'alimentation, la tension moyenne de sortie est proche de la tension continue d'entrée.

Dans un autre type de fonctionnement du « buck converter », on maintient le temps Ton constant et on change la fréquence de commutation c'est-à-dire la période T de commutation pour rendre le rapport Ton/T variable.

En pratique, les interrupteurs sont réalisés par deux semi-conducteurs en série, par exemple deux interrupteurs MOS, commandés par des signaux complémentaires à la fréquence 1/T.

Les hacheurs série de l'état de l'art présentent néanmoins des limitations. En effet, un rapport cyclique Ton/T de 0,1 est un minimum pouvant être aujourd'hui obtenu avec des performances acceptables de rendement et de fiabilité.

Mais lorsque l'on veut obtenir une tension de sortie inférieure au dixième de la tension d'entrée, les temps de conduction Ton du semi-conducteur fournissant l'énergie à la charge deviennent très courts et les interrupteurs deviennent très difficiles à commander. En outre, si la tension de sortie diminue, pour une même puissance délivrée à la charge, les courants dans les semi-conducteurs deviennent importants, aux limites de leurs possibilités, avec une perte de rendement du convertisseur.

Un autre moyen pour obtenir un rapport entre la tension d'entrée et la tension de sortie, bien supérieur à 10, consiste à réaliser un dispositif abaisseur de tension comportant deux hacheurs en cascade. Dans ce dispositif, la tension de sortie d'un premier hacheur est appliquée à l'entrée d'un second hacheur. Ainsi on peut obtenir des rapports entre la tension d'entrée et la tension de sortie du dispositif beaucoup plus importants que ceux obtenus par un seul hacheur. Néanmoins, un tel dispositif abaisseur comportant deux hacheurs en cascade présente un rendement global inférieur au rendement d'un seul hacheur et un coût de réalisation plus important. Le document JP 03 235 657 montre un hacheur avec les caractéristiques du préambule de la revendication 1.

Afin de pallier les inconvénients des hacheurs série de l'art antérieur, l'invention propose un hacheur série comportant :

- une paire de bornes d'entrée A et B pour connecter une tension continue d'entrée Vin entre ces deux bornes, le potentiel de la borne A étant supérieur au potentiel de la borne B ;
- une paire $P\_0$ d'interrupteurs SB, SH en série connectée par l'interrupteur SB à la borne d'entrée B, chaque interrupteur SB, SH comportant une entrée de commande pour être mis simultanément, l'un dans un état passant par l'application à son entrée de commande d'un premier signal de commande, l'autre dans un état isolé par l'application à son entrée de commande d'un second signal de commande complémentaire du premier ;
- une paire de bornes de sortie C et D, pour alimenter, par une tension de sortie Vout, une charge Rout, la borne de sortie D étant connectée à la borne d'entrée B et la borne de sortie C au point de connexion entre les deux interrupteurs SB et SH en série à travers une self de filtrage Lout, caractérisé en ce qu'il comporte :

- K autres paires supplémentaires $P\_1$, $P\_2$,....$P\_i$,..., $P\_{K-1}$, $P\_K$ d'interrupteurs en série entre la borne d'entrée A et l'interrupteur SH de la paire $P\_0$, avec i = 1, 2,...K-1, K, les deux interrupteurs d'une même paire supplémentaire $P\_i$ étant connectés en série à travers une self de récupération d'énergie $Lr\_i$ ;
- K groupes d'entrée, $Gin\_1$, $Gin\_2$,...$Gin\_i$...$Gin\_{K-1}$, $Gin\_K$, de Ni capacités C de même valeur en série chacun, avec i= 1, 2,...K-1, K et Ni = (K+1)-i, l'électrode des capacités d'une des deux extrémités de chaque groupe d'entrée $Gin\_1$, $Gin\_2$,...$Gin\_i$,...$Gin\_{K-1}$, $Gin\_K$ étant connectée à la borne d'entrée A, au moins l'électrode des capacités de chacune des autres extrémités des groupes d'entrée $Gin\_1$, $Gin\_2$,...$Gin\_i$,...$Gin\_{K\_1}$, $Gin\_K$ étant connectée respectivement au point de connexion entre deux paires d'interrupteurs consecutives $P\_{(i-1)}$ et $P\_i$ ;
- K groupes de sortie, $Gout\_1$, $Gout\_2$,...$Gout\_i$...$Gout\_{K-1}$, $Gout\_K$, de Mi capacités C de même valeur en série chacun, avec i= 1, 2, K et Mi=i, l'électrode des capacités d'une des deux extrémités de chaque groupe de sortie $Gout\_1$, $Gout\_2$,...$Gout\_i$,...$Gout\_{K-1}$, $Gout\_K$ étant connectée au point commun entre les deux interrupteurs de la paire $P\_0$, au moins l'électrode des capacités de chacune des autres extrémités des groupes de sortie $Gout\_1$, $Gout\_2$,...$Gout\_i$,...$Gout\_K$ étant connectée respectivement au point commun entre chaque interrupteur $SH\_i$ et la self de récupération $Lr\_i$ de la paire correspondante $P\_i$ de même rang i,

en ce que les interrupteurs de ces autres K paires supplémentaires sont commandés simultanément par les premiers et seconds signaux de commande complémentaires formant, lorsque l'interrupteur SB de la paire $P\_0$ relié à la borne B est commandé dans l'état passant pendant un temps Toff, un premier réseau de capacités connecté entre la borne A et la borne B, comportant les groupes de capacités d'entrée en série avec les groupes de capacités de sortie tels qu'un groupe de capacités d'entrée $Gin\_i$ est en série, à travers sa respective self de récupération d'énergie $Lr\_i$, avec son respectif groupe de capacités de sortie $Gout\_i$,

et en ce que lorsque l'interrupteur SB de la paire $P\_0$ relié à la borne d'entrée B est commandé dans l'état isolé, SH étant commandé à l'état passant, pendant un temps Ton, ces autres K paires d'interrupteurs forment un second réseau de capacités connecté entre la borne A et la self de filtrage de sortie Lout comportant le groupe d'entrée $Gin\_1$ en parallèle avec le groupe de sortie $Gout\_K$, en parallèle avec des groupes de capacités d'entrée en série avec des groupes des capacités de sortie tels qu'un groupe de capacités d'entré $Gin\_i$ se trouve en série avec un groupe de capacités de sortie $Gout\_{(i-1)}$.

La tension Vout en sortie du hacheur est fonction du rapport cyclique Ton/T, les capacités C des réseaux ayant une même valeur, la tension Vout est donnée par la relation :

Vout = Vin.(Ton/T).1/(K+1) avec une fréquence de découpage de la tension d'entrée Vin de période T = Ton +Toff.

L'invention sera mieux comprise à l'aide d'exemples de réalisations selon l'invention, en référence aux dessins indexés, dans lesquels :

- la figure 1a, déjà décrite, représente le schéma de principe d'un hacheur série abaisseur de tension ;
- les figures 1b, 1c, 1d et 1e montrent des diagrammes d'état de commande du hacheur de la figure 1a ;
- la figure 2 montre la structure générale du hacheur selon l'invention comportant K paires d'interrupteurs supplémentaires ;
- la figure 3 montre une structure d'un hacheur série comportant deux paires d'interrupteurs sans les selfs Lr _i de récupération ;
- la figure 4 montre le hacheur de la figure 3 dans une configuration plus réaliste ;
- la figure 5 représente les pertes en watts dans le cas du hacheur de la figure 3 alimenté par une source de tension parfaite et par une source réelle ;
- la figure 6 montre les courbes des pertes en watts pour différentes tensions de sortie Vout du hacheur de la figure 4 ;
- la figure 7 montre les variations de pertes de puissance de la figure 5 exprimées en pourcentage de la puissance fournie par le hacheur ;
- la figure 8 montre les variations de pertes de puissance de la figure 6 exprimées en pourcentage de la puissance fournie par le hacheur ;
- la figure 9a montre un hacheur selon l'invention dans une structure comportant deux paires d'interrupteurs et dans la configuration plus réaliste de la figure 4 ;
- la figure 10 montre un schéma équivalent du hacheur de la figure 9a selon l'invention pendant la période Toff ;
- la figure 11 montre les signaux de commande des interrupteurs du hacheur de la figure 9a pendant les temps Toff et Ton ;
- la figure 12 montre, pendant le temps Toff, la variation du courant Ilr_1 dans la self de récupération d'énergie Lr_1 ;
- la figure 13 représente l'espace énergétique dans la self de récupération Lr_1 et dans les capacités Ce, Cs du hacheur ;
- la figure 14 montre la variation de la valeur de la tension Vin aux bornes du hacheur selon l'invention ;
- les figures 15 et 16 représentent deux structures pratiques du hacheur série selon l'invention ;
- la figure 17 représente une variante du hacheur série de la figure 9a selon l'invention

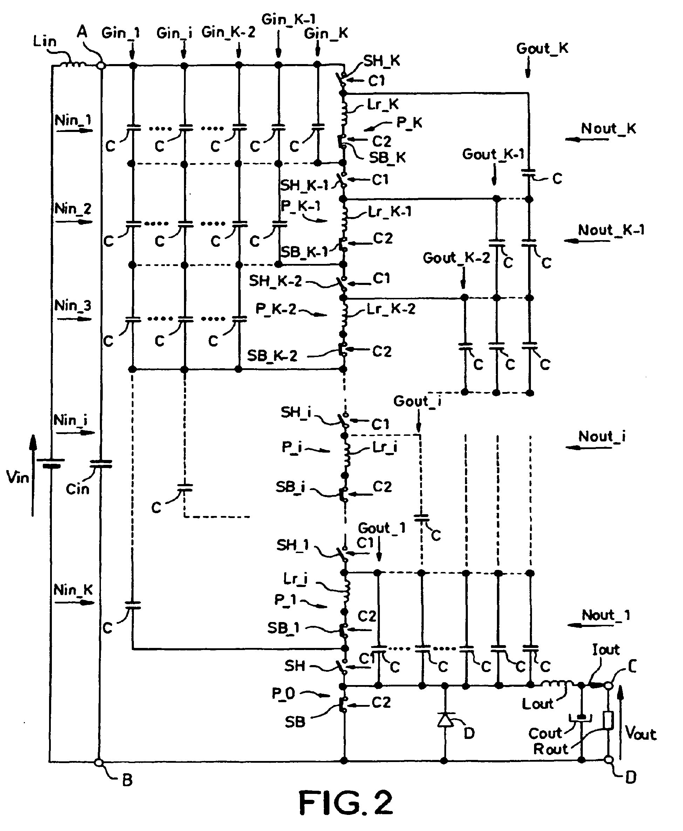

La figure 2 montre la structure générale du hacheur selon l'invention comportant K paires d'interrupteurs supplémentaires. Le hacheur de la figure 2 comporte, en outre, la diode D de retour de courant aux bornes de l'interrupteur SB dont l'anode est connectée du côté des bornes B et D et une capacité Cout de filtrage de sortie en parallèle sur la charge Rout entre les bornes de sortie C et D.

Dans la structure générale du hacheur selon l'invention de la figure 2 les tensions Vc aux bornes des capacités des groupes d'entrée ou des groupes de sortie ont une même valeur continue, ainsi, les capacités situées à un même niveau de potentiel peuvent être reliées entre elles.

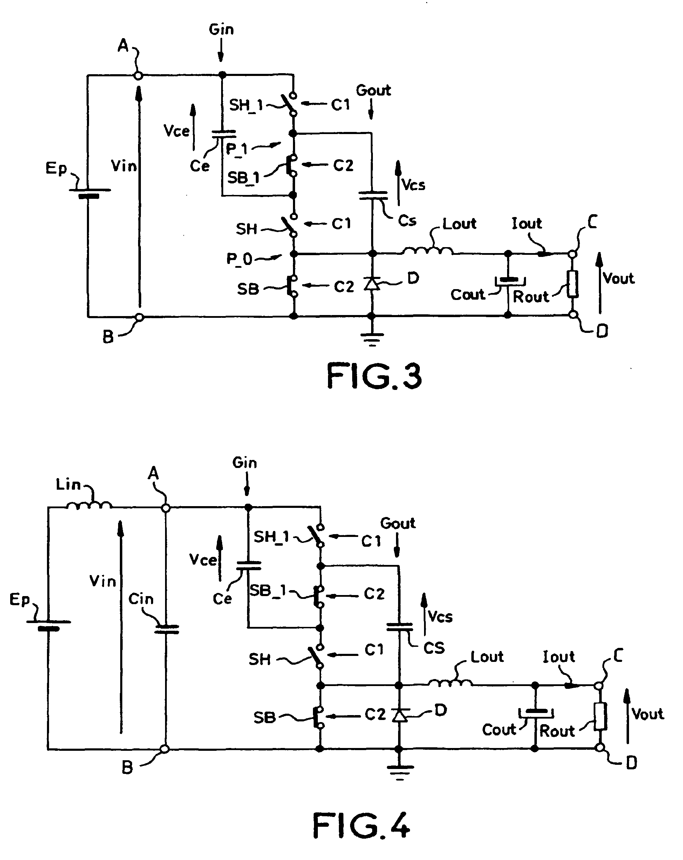

Pour expliquer l'amélioration du rendement du hacheur série selon l'invention apportée par les selfs de récupération Lr_i, connectées entre les deux interrupteurs de chacune des paires supplémentaires, dans une première étape de cette explication, la figure 3 montre une structure d'un hacheur série comportant deux paires d'interrupteurs sans les selfs Lr_i de récupération, les interrupteurs de chaque paire étant dans ce cas connectés directement en série, la tension d'alimentation Vin étant supposée provenir d'un générateur Ep parfait dont la tension est indépendante du courant débité.

Le hacheur de la figure 3 comporte deux paires P_0 et P_1, chacune des paires ayant deux interrupteurs connectés en série, les interrupteurs SB, SH pour la paire P_0 et les interrupteurs SB_1, SH_1 pour la paire supplémentaire P_1. Chaque interrupteur d'une paire comporte une entrée de commande pour être mis simultanément, l'un dans un état passant par l'application à son entrée de commande d'un premier signal de commande C1, l'autre dans un état isolé par l'application à son entrée de commande d'un second signal de commande C2 complémentaire du premier ;

Pour expliquer le fonctionnement du hacheur de la figure 3, la capacité du groupe d'entrée Gin sera désignée Ce et la capacité du groupe de sortie Gout par Cs.

Au début de la phase de conduction des interrupteurs SH et SH_1 de chacune des deux paires, la tension Vce aux bornes de la capacité Ce d'entrée et la tension Vcs aux bornes de la capacité de sortie Cs sont égales à Vin/2, Ce et Cs ayant la même valeur égale à C1.
A la fin de la phase de conduction Vce et Vcs sont toujours égales mais leurs valeurs deviennent :

$$Vce = Vcs = \frac{Vin}{2} + \frac{1}{C1} \cdot \frac{Iout}{2} \cdot ton$$

avec Iout courant dans la résistance de charge Rout du hacheur

Ton temps de conduction de SH et SH_1

Lors de la phase suivante de conduction des interrupteurs SB et SB_1 des deux paires (Toff), la somme des tensions aux bornes des capacités Ce et Cs est ramenée à la même valeur avec :

$$Vce = Vcs = \frac{Vin}{2}$$

On a donc une perte d'énergie due au rééquilibrage résistif des capacités Ce et Cs à travers les interrupteurs SB et SB_1.

Les pertes de ce rééquilibrage augmentent avec le courant débité Iout et avec le rapport cyclique.

Ces pertes sont données par la relation (1) :

$$P(w) = \frac{Iout^2 \cdot Vout^2}{F \cdot C1 \cdot Vin^2}$$

Avec :

Vin = 32 volts
Vout = 5 volts
Iout = 10 ampères
C1 = 10 microfarads
F = 350 KHz

Les pertes sont de 1,163 watts pour une puissance de sortie de 50 watts, soit environ, 2.3% de la puissance de sortie.

La figure 4 montre le hacheur de la figure 3 dans une configuration plus réaliste. En effet, l'alimentation du hacheur comporte le générateur Ep de tension en série avec une self d'entrée Lin de la connectique d'alimentation et une capacité de filtrage d'entrée Cin en parallèle entre les deux bornes d'entrée A et B du hacheur.

Dans cette configuration de la figure 4, on observe le même accroissement de tension Vce et Vcs sur les respectives capacités Ce et Cs pendant la phase de conduction des interrupteurs SH et SH_1, avec en plus une diminution de la tension aux bornes de la capacité d'entrée Cin de :

$$\Delta Vcin = -\frac{Iout}{Cin} \cdot ton$$

Lors de la fermeture de SB et SB_1 nous avons aussi un rééquilibrage résistif et donc dissipatif de Cin, Ce et Cs.

Les pertes de rééquilibrage dans le cas du hacheur de la figure 4 plus réaliste sont données par l'équation (2) :

$$P(w) = \frac{F}{2} \cdot \left[ Cin \cdot \left( Vin - \frac{2 \cdot Iout \cdot Vout}{F \cdot Cin \cdot Vin} \right)^2 + \frac{C1}{2} \cdot \left( Vin - \frac{2 \cdot Iout \cdot Vout}{F \cdot C1 \cdot Vin} \right)^2 \right.$$

$$\left. - \left( Cin + \frac{C1}{2} \right) \cdot \left( Vin - \frac{2 \cdot Iout \cdot Vout}{F \cdot Cin \cdot Vin} + \frac{C1 + Cin}{2 \cdot Cin + C1} \cdot \frac{2 \cdot Iout \cdot Vout}{F \cdot Cin \cdot Vin} \right)^2 \right]$$

Avec:

Vin = 32 volts

Vout = 5 volts
Iout = 10ampères
Cin = 6 microfarads
C1 = 6 microfarads
F = 350 KHz

Les pertes sont de 3,1 watts pour une puissance de sortie de 50 watts, soit environ, 6.2% de la puissance de sortie, donc une perte trois fois plus élevée que dans le cas du circuit avec alimentation parfaite de la figure 3.

On notera que la limite de cette équation (2) lorsque Cin tend vers l'infini est l'équation d'une tension d'entrée Vin parfaite. En pratique, nous sommes limités par la taille et le coût de la capacité de filtrage d'entrée Cin. Nous aurons bien dans la pratique une perte trois fois plus importante que dans le cas théorique représenté à la figure 3.

Ce résultat avec K=1 est généralisable à des hacheurs comportant plus d'une paire supplémentaire.

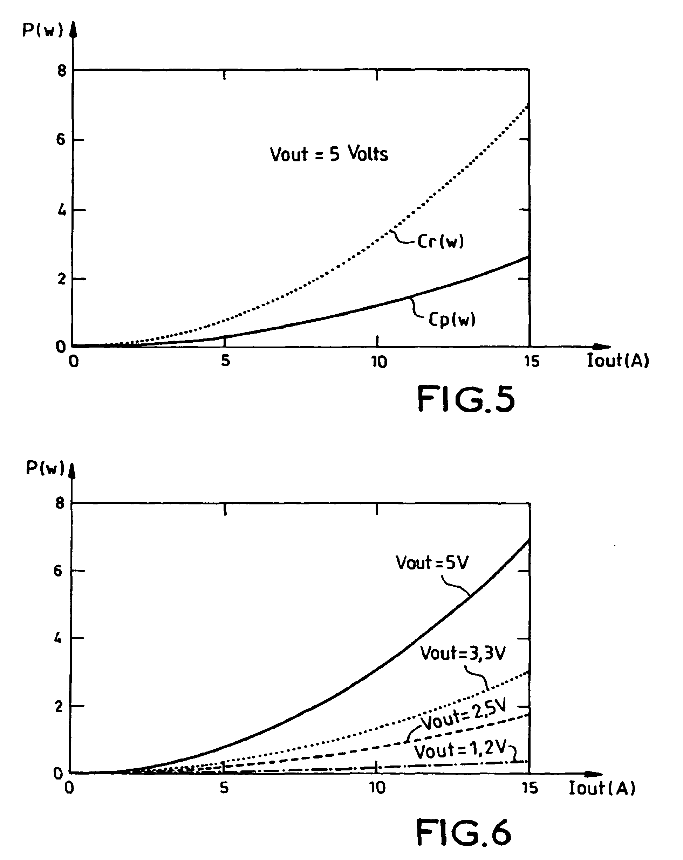

La figure 5 montre les pertes P(w) en watts en fonction du courant de sortie Iout dans la charge Rout pour une tension Vout de 5 volts..

La courbe Cp(w) de la figure 5 représente les pertes en watts dans le cas du hacheur de la figure 3 alimenté par une source de tension parfaite. La courbe Cr(w) de la même figure 5 représente les pertes en watts dans le cas du hacheur de la figure 4 plus réaliste.

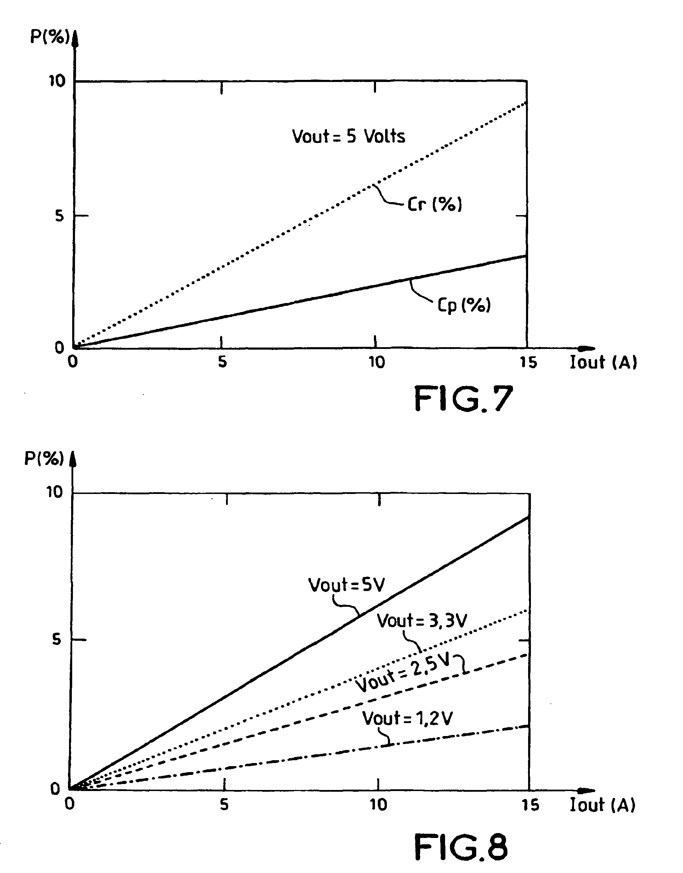

La figure 7 montre les variations de pertes de puissance de la figure 5 exprimées en pourcentage de la puissance fournie par le hacheur. Courbes Cp(%) et Cr(%)

Dans le cas des figures 5 et 7, les pertes P(w) sont calculées pour les valeurs des paramètres suivants :

Vin = 32 volts
Vout = 5 volts
Iout = 10 ampères
Cin = 6 microfarads
C1 = 6 microfarads
F = 350 KHz, F étant la fréquence de découpage du hacheur.

La figure 6 montre les courbes des pertes P(w) en watts pour différentes tensions de sortie Vout du hacheur de la figure 4 plus réaliste, les autres paramètres étant identiques à ceux de la réalisation de la figure 3.

La figure 8 montre les variations de pertes de puissance de la figure 6 exprimées en pourcentage de la puissance fournie par le hacheur.

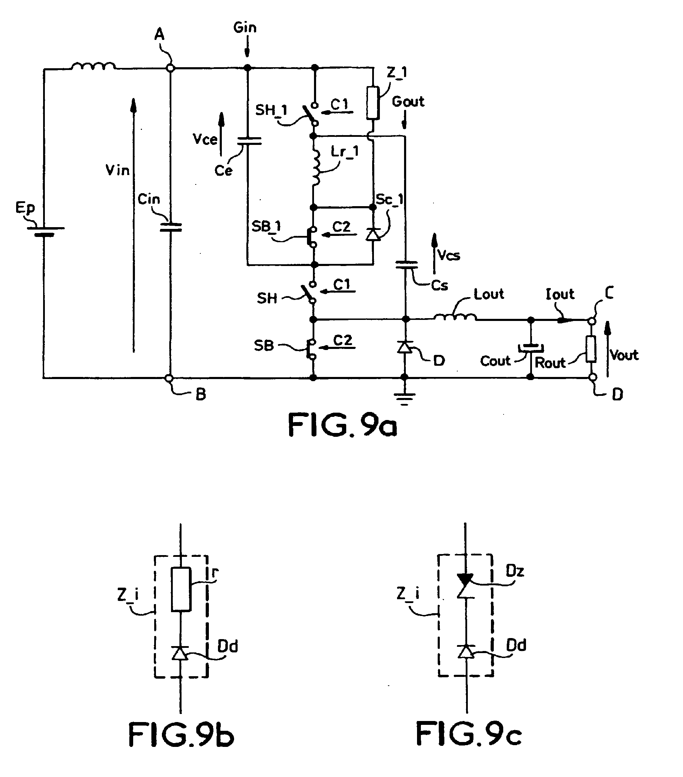

La figure 9a montre un hacheur selon l'invention dans une structure comportant deux paires d'interrupteurs et dans la configuration plus réaliste de la figure 4 au niveau de l'alimentation. L'alimentation, fournissant la tension d'alimentation Vin du hacheur, comporte le générateur Ep de tension en série avec la self d'entrée Lin et la capacité de filtrage Cin en parallèle entre les deux bornes d'entrée A et B du hacheur.

Le hacheur de la figure 9a comporte la paire P_0 ayant les deux interrupteurs SB et SH connectés en série et la paire supplémentaire P_1 ayant les deux interrupteurs SB_1 et SH_1 connectés en série à travers une self de récupération d'énergie Lr_1.

Nous allons, par la suite, expliquer le fonctionnement du hacheur série de la figure 9a selon l'invention.

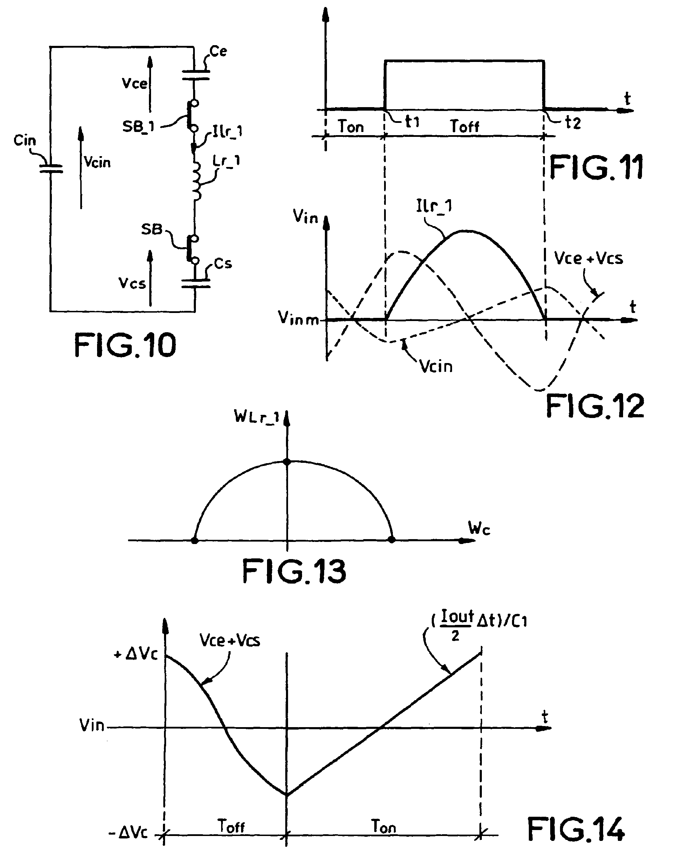

La figure 10 montre un schéma équivalent du hacheur de la figure 9a selon l'invention pendant la période Toff correspondant à la période de conduction des interrupteurs des deux paires SB et SB_1. Pendant ce temps Toff les interrupteurs SB et SB_1 sont fermés, les interrupteurs SH et SH_1 sont ouverts, la capacité d'entrée Cin est en parallèle avec les deux capacités Ce et Cs en série avec la self Lr_1 de récupération.

La self de récupération Lr_1 est calculée pour obtenir une résonance du circuit oscillant de la figure 10 telle que :

$$Toff = \pi \sqrt{Lr\_1 \cdot Ceq}$$

avec

$$Ceq = \frac{1}{\dfrac{1}{Cin} + \dfrac{1}{Ce} + \dfrac{1}{Cs}}$$

On considère que Toff est constant et égal à environ la demi-période de la fréquence de résonance du circuit équivalent de la figure 10.

La figure 11 montre les signaux de commande des interrupteurs du hacheur de la figure 9a pendant les temps Toff et Ton.

La figure 12 montre pendant le temps Toff, la variation du courant IIr_1 dans la self de récupération d'énergie Lr_1 ainsi que la somme des tensions (Vce +Vcs) aux bornes des respectives capacités Ce et Cs.

Au temps t1 lors du passage de Ton à Toff, le courant dans la self est nul, la tension (Vce + Vcs) aux bornes des capacités Ce et Cs est supérieure à la valeur moyenne Vinm de Vin et décroît en passant par la valeur moyenne de Vin, le courant dans la self augmente en emmagasinant de l'énergie magnétique, passe par une valeur maximum lorsque (Vce+Vcs) passe par la valeur moyenne de Vin, puis le courant décroît jusqu'à une valeur nulle, correspondant à la fin de Toff, rendant l'énergie aux capacités Ce et Cs. Le courant dans la self devenant nul, la somme des tensions (Vce+Vcs) s'accroît, pendant le temps Ton, au-dessus de la valeur moyenne de Vin puis le cycle recommence au début de Toff.

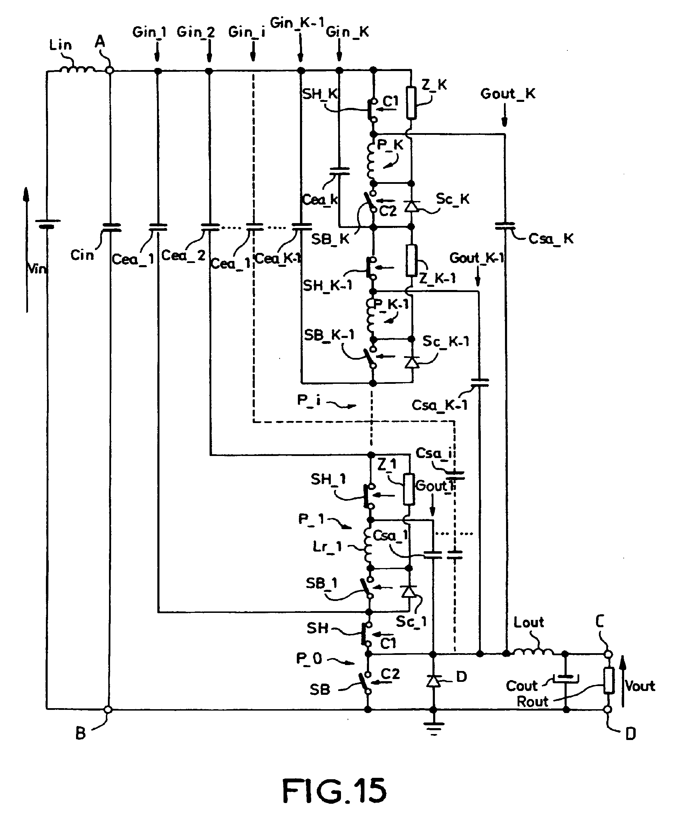

La figure 13 représente l'espace énergétique dans la self de récupération Lr_1 et dans les capacités Ce, Cs du hacheur. L'axe des abscisses représente l'énergie des capacités Wc l'axe des ordonnées l'énergie dans la self WIr_1, la variation d'énergie entre la self et les capacités se produisant dans le temps Toff. Pendant cette phase Toff, la variation de l'énergie dans les capacités et dans la self produit une faible variation de la valeur moyenne de la tension Vin. L'énergie est transférée des capacités vers la self de récupération puis rendue aux capacités.

L'accord du circuit du hacheur à la fréquence de fonctionnement avec la self de récupération Lr_1 diminue considérablement les pertes résistives dans le circuit du hacheur série selon l'invention. Ces pertes deviennent alors pratiquement nulles.

La figure 14 montre la variation de la valeur de la tension Vin aux bornes du hacheur selon l'invention.

Pendant le temps Toff la tension Vin varie selon (Vcs+Vce),

de $+\Delta v$ à $-\Delta v$ puis pendant Ton la tension varie de $-\Delta v$ à $\Delta v$ en fonction du courant de sortie Iout, cette variation est donnée par la relation (3):

$$\frac{Iout}{2} \cdot \frac{dt}{C1}$$

En outre, afin de rendre plus fiable le hacheur selon l'invention, le hacheur série représenté à la figure 9a comporte en parallèle avec la paire P_1 une diode Sc_1 en série avec une impédance Z_1, l'anode de la diode Sc_1 étant connectée au point de connexion entre la paire P_1 et la paire inférieure P_0, le point commun entre la cathode de la diode Sc_1 et l'impédance Z_1 étant connecté au point de connexion entre l'interrupteur SB_1 et la self de récupération Lr_1.

En effet, en pratique, le Toff ne représente pas parfaitement la demi-période de résonance du circuit équivalent de la figure 10, l'impédance Z1 permet de dissiper le courant résiduel et protéger les interrupteurs qui sont généralement des transistors MOS. La diode Sc_1 est une diode de « roue libre ».

Cette amélioration du hacheur de la figure 9a est applicable dans le cas général, ainsi chaque paire supplémentaire P_i du hacheur selon l'invention comporte en parallèle une diode Sc_i en série avec une impédance Z_i, l'anode de la diode Sc_i étant connectée au point de connexion entre la paire P_i et la paire inférieure P_i-1, le point commun entre la cathode de la diode Sc_i et l'impédance Z_i étant connecté au point commun entre l'interrupteur SB_i et la self de récupération Lr_i.

L'impédance Z_i comporte, dans une première version montrée à la figure 9b, une diode Dd en série avec une résistance r, l'anode de la diode Dd étant reliée, dans le circuit du hacheur, à la cathode de la diode Sc_i et dans une seconde version, montrée à la figure 9c, l'impédance Z_i comporte la diode Dd en série avec une diode zéner Dz, les deux cathodes de la diode Dd et la diode zéner Dz étant reliées entre elles, l'anode de la diode Dd étant reliée, dans le circuit du hacheur, à la cathode de la diode Sc_i.

Les diodes de « roue libre » Sc_1,...Sc_i, la diode D assurant la continuité de courant dans la self de sortie Lout et les diodes Dd des impédances Z_i peuvent être, pour certaines réalisation du hacheur, des diodes au silicium, pour d'autres réalisations, des diodes Schottky .

L'explication du fonctionnement du hacheur série comportant la self de récupération Lr_1 à deux paires (K=1) reste valable pour un nombre quelconque de K paires supplémentaires. En effet, les courants dans les différentes paires P_i et dans la self de récupération correspondante Lr_i sont les mêmes, le nombre de capacités élémentaires C dans les groupes mis en série par les interrupteurs étant les mêmes.

Cette structure générale représentée à la figure 2 permet de réaliser simplement différentes autres structures pratiques et de déterminer directement la valeur des capacités dans chaque branche d'entrée ou de sortie.

En effet, comme cela a été dit précédemment, dans la structure générale de la figure 2 comportant des capacités C de même valeur, les tensions Vc aux bornes de chacune des capacités sont les mêmes pour les groupes d'entrée et les mêmes pour les groupes de sortie, de ce fait, les capacités d'un même niveau de potentiel peuvent être connectées en partie ou en totalité en parallèle.

Les capacités d'un même niveau de potentiel Nin_1 sont, par exemple, toutes celles des groupes d'entrée Gin_1, Gin_2,...Gin_i,...Gin_K-1, Gin_K ayant une électrode connectée à la borne d'entrée A, d'un niveau de potentiel Nin_2, toutes celles connectées par une électrode aux électrodes libres des capacités du niveau Nin_1 et par l'autre électrode à celles du niveau suivant Nin_3 et ainsi de suite jusqu'u niveau Nin_K.

De même, pour les capacités des groupes de sortie, nous aurons le niveau Nout_1 pour toutes celles des groupes de sortie, Gout_1, Gout_2,...Gout_i,...Gout_K-1, Gout_K connectées au point commun entre les deux interrupteurs de la paire P_0, d'un niveau de potentiel Nout_2 toutes celles connectées par une électrode aux électrodes libres des capacités du niveau Nout_1 et par l'autre électrode à celles du niveau suivant Nout_3 et ainsi de suite jusqu'au niveau Nout_K.

Les traits en pointillés sur le schéma de la figure 2 représentent les connexions possibles entre les capacités C de même valeur.

Dans une première structure pratique représentée à la figure 15 ne comportant pas d'interconnexion entre les capacités d'un même niveau de potentiel, chacun des groupes d'entrée Gin_i ou de sortie Gout_i comporte respectivement une seule capacité Cea_1, Cea_2 ;....Cea_i...... Cea_K pour le groupe d'entrée Gin_i et Csa_1, Csa_2 ;....Csa_i...... Csa_K. pour les groupes de sortie Gout_i. La valeur de chacune de ces capacités d'entrée Cea_i se déduit simplement de la structure générale par le calcul de la capacité résultante de Ni = (K+1)-i capacités C en série, avec i=1, 2,....K, i étant l'ordre du groupe d'entrée considéré :

$$
\begin{aligned}
Cea\_1 &= C/K & i&=1 \\
Cea\_2 &= C/(K-1) & i&=2 \\
&.... \\
Cea\_i &= C/((K+1)-i) & i& \\
&..... \\
Cea\_K &= C & i&=K
\end{aligned}
$$

La valeur de chacune de ces capacités de sortie Csa_i se déduit simplement de la structure générale par le calcul de la capacité résultante de Mi=i capacités C en série, i étant l'ordre du groupe de sortie considéré :

$$
\begin{aligned}
Csa\_1 &= C & i&=1 \\
Csa\_2 &= C/2 & i&=2 \\
&.... \\
Csa\_i &= C/i & i& \\
&..... \\
Csa\_K &= C/K & i&=K
\end{aligned}
$$

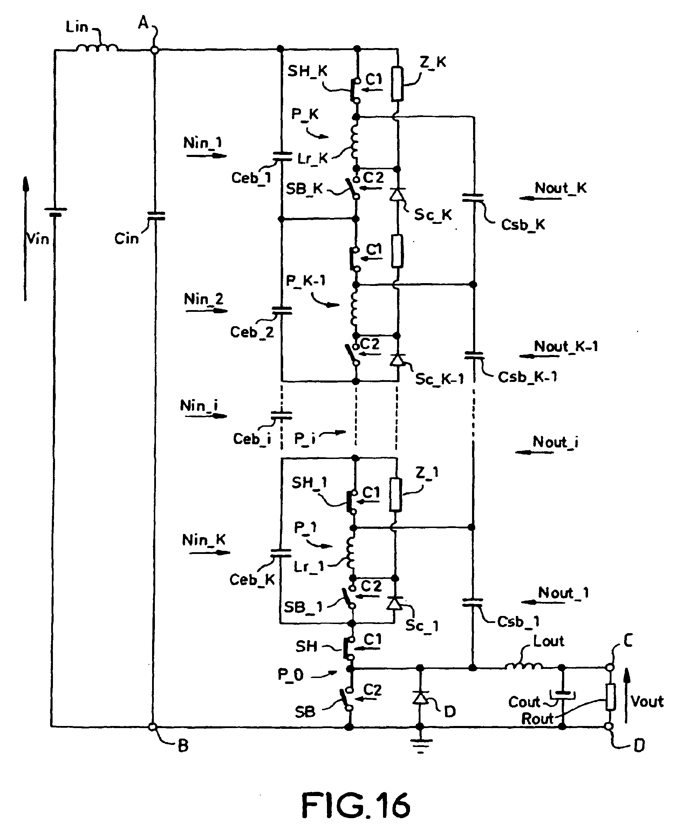

Dans une deuxième structure pratique représentée à la figure 16 comportant les interconnexions entre les capacités d'un même niveau Nv de potentiel (capacités en parallèle), la structure comporte un seul groupe d'entrée Gin et un seul groupe de sortie Gout. La capacité d'entrée de chacun des niveaux de potentiel Nin_i, i étant l'ordre du niveau de potentiel considéré en entrée, en parallèle avec sa respective paire P_i sera déduite simplement en calculant la capacité Ceb_i équivalente aux capacités en parallèle du niveau Nin_i considéré, soit :

$$
\begin{aligned}
Ceb\_1 &= C. K & i&=1 \\
Ceb\_2 &= C.(K-1) & i&=2 \\
&.... \\
Ceb\_i &= C.((K+1)-i) & i& \\
&..... \\
Ceb\_K &= C & i&=K
\end{aligned}
$$

La capacité de sortie de chacun des niveaux de potentiel Nout_i, en parallèle entre deux paires consécutives paire P_i, P_i-1 sera déduite simplement en calculant la capacité Csb_i équivalente aux capacités en parallèle du niveau Nout_i considéré, i étant l'ordre du niveau de potentiel en sortie considéré, soit :

$$Csb\_1 = C. K \qquad i=1$$
$$Csb\_2 = C.(K-1) \qquad i=2$$
$$....$$
$$Csb\_i = C.((K+1)-i) \qquad i$$
$$.....$$
$$Csb\_K = C \qquad i=K$$

Dans d'autres réalisations on peut, bien entendu, combiner les deux types de réalisations pratiques en mettant des capacités en parallèle pour certains groupes et en série pour d'autres.

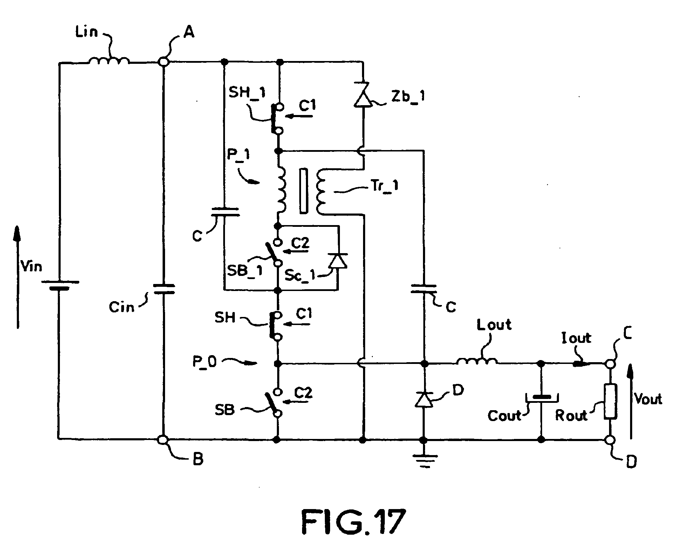

La figure 17 représente une variante du hacheur série de la figure 9a selon l'invention. Dans cette variante la self de récupération Lr_1 est remplacée par un transformateur Tr_1 dont le primaire est connecté à la place de la self de récupération entre les deux interrupteurs de la première paire supplémentaire P_1, le secondaire étant connecté d'un coté aux bornes B et D du hacheur et de l'autre côté à la borne d'entrée A à travers une diode zéner Zb_1 dont la cathode se trouve connectée à ladite borne d'entrée A.

Dans cette variante le transfert d'énergie emmagasinée dans la self du transformateur Tr_1 s'effectue vers la source d'alimentation (capacité Cin) et non pas vers les capacités de liaison C comme dans le cas de la réalisation de la figure 9a.

Dans un cas général, la réalisation de la figure 17 est applicable à un hacheur comportant plus d'une paire supplémentaire, le hacheur comporte alors K transformateurs de récupération, le primaire d'un transformateur d'ordre Tr_i étant connecté entre les deux interrupteurs de la paire supplémentaire P_i, le secondaire étant connecté d'un côté aux bornes B et D du hacheur et de l'autre côté à la borne d'entrée A à travers une diode zéner Zb_i dont la cathode se trouve connectée à ladite borne d'entrée A.

Dans une autre variante, le transfert d'énergie emmagasinée dans la self de récupération, s'effectue vers la charge de sortie Rout, le hacheur selon l'invention comporte K transformateurs de récupération, le primaire d'un transformateur d'ordre Tr_i étant connecté entre les deux interrupteurs de la paire supplémentaire P_i, le secondaire étant connecté d'un côté aux bornes B et D du hacheur et de l'autre côté à la résistance de sortie Rout à travers une diode zéner Zb_i dont la cathode se trouve connectée à ladite résistance de sortie, le transfert d'énergie emmagasinée dans la self de récupération s'effectuant vers la charge de sortie Rout.

Le hacheur série selon l'invention permet d'obtenir des rendements nettement supérieurs au rendements des hacheurs de l'état de l'art avec des rapports de tension Vout/Vin inférieurs à 1/10. Pratiquement on obtient des rendements meilleurs d'environ 6% par rapport au hacheur série de l'état de l'art avec des structures adaptables aux differents cas industriels et simples à mettre en oeuvre.

**Revendications**

1. Hacheur série comportant :

- une paire de bornes d'entrée (A et B) avec une première (A) et une deuxieme (B) borne d'entrée, pour connecter une tension continue d'entrée (Vin) entre ces deux bornes, le potentiel de la première borne (A) étant supérieur au potentiel de la deuxième borne (B);
- une première paire (P_0) d'interrupteurs (SB, SH) en série connectée par le premier interrupteur (SB) à la deuxième borne d'entrée (B), chaque interrupteur (SB, SH) comportant une entrée de commande pour être mis simultanément, l'un dans un état passant par l'application à son entrée de commande d'un premier signal de commande, l'autre dans un état isolé par l'application à son entrée de commande d'un second signal de commande complémentaire du premier ;
- une paire de bornes de sortie (C et D) avec une première (C) et une deuxième (D) borne de sortie, pour alimenter, par une tension de sortie (Vout), une charge (Rout), la deuxième borne de sortie (D) étant connectée à la deuxième borne d'entrée (B) et la première borne de sortie (C) au point de connexion entre les deux interrupteurs de la première paire (SB et SH) en série à travers une self de filtrage (Lout), **caractérisé en ce qu'**il comporte :
- K autres paires supplémentaires (P_1, P_2,....P_i,..., P_K-1, P_K) d'interrupteurs en série entre la première borne d'entrée (A) et un deuxième interrupteur (SH) de la première paire d'interrupteurs (P_0), les deux interrupteurs d'une même paire supplémentaire (P_i) étant connectés en série à travers une self de récupération d'énergie (Lr_i);
- K groupes d'entrée, (Gin_1, Gin_2,...Gin_i...Gin_K-1, Gin_K), de Ni capacités (C) de même valeur en série chacun, avec Ni = (K+1)-i et i = 1, 2, ... K-1, K, l'électrode des capacités d'une des deux extrémités de chaque groupe d'entrée (Gin_1, Gin_2,...Gin_i,...Gin_K-1, Gin_K) étant connectée à la première borne d'entrée (A), au moins l'électrode des capacités de chacune des autres extrémités des groupes d'entrée (Gin_1, Gin_2,...Gin_i,...Gin_K-1, Gin_K) étant connectée respectivement au point de connexion entre deux paires supplémentaires d'interrupteurs consécutives (P_(i-1) et P_i);
- K groupes de sortie, (Gout_1, Gout_2,...Gout_i,...Gout_K-1, Gout_K), de Mi capacités (C) de même valeur en série chacun, avec i= 1, 2, K et Mi=i, l'électrode des capacités d'une des deux extrémités de chaque groupe de sortie (Gout_1, Gout_2,...Gout_i,...Gout_K-1, Gout_K) étant connectée au

point commun entre les deux interrupteurs de la première paire (P_0), au moins l'électrode des capacités de chacune des autres extrémités des groupes de sortie (Gout_1, Gout_2,...Gout_i,...Gout_K) étant connectée respectivement au point commun entre chaque deuxième interrupteur de chaque paire supplémentaire d'interrupteurs (SH_i) et la self de récupération (Lr_i) de la paire correspondante (P_i) de même rang (i),
**en ce que** les interrupteurs de ces autres K paires supplémentaires sont commandés simultanément par les premiers et seconds signaux de commande complémentaires formant, lorsque le premier interrupteur (SB) de la première paire (P_0) relié à la deuxième borne d'entrée (B) est commandé dans l'état passant pendant un temps Toff, un premier réseau de capacités connecté entre bornes, d'entrée comportant les groupes de capacités d'entrée en série avec les groupes de capacités de sortie tels qu'un groupe de capacités d'entrée (Gin_i) est en série, à travers sa respective self de récupération d'énergie (Lr_i), avec son respectif groupe de capacités de sortie (Gout_i),
et **en ce que** lorsque le premier interrupteur (SB) de la première paire (P_0) relié à la deuxième borne d'entrée (B) est commandé dans l'état isolé, le deuxième interrupteur (SH) étant commandé à l'état passant, pendant un temps Ton, ces autres K paires supplémentaires d'interrupteurs forment un second réseau de capacités connecté entre la première borne d'entrée (A) et la self de filtrage de sortie (Lout) comportant le premier groupe de capacités d'entrée (Gin_1) en parallèle avec le dernier groupe de capacités de sortie (Gout_K), en parallèle avec des groupes de capacités d'entrée en série avec des groupes des capacités de sortie tels qu'un groupe de capacités d'entré (Gin_i) se trouve en série avec un groupe de capacités de sortie (Gout_(i-1)).

2. Hacheur série selon la revendication 1, **caractérisé en ce que** chaque paire supplémentaire d'interrupteurs (P_i) du hacheur comporte en parallèle une première diode (Sc_i) en série avec une impédance associée (Z_i), l'anode de la diode (Sc_i) étant connectée au point de connexion entre la paire concernée (P_i) et la paire inférieure (P_i-1), le point commun entre la cathode de la diode (Sc_i) et l'impédance associée (Z_i) étant connectée au point commun entre le premier interrupteur de la paire concernée (SB_i) et la self de récupération (Lr_i) associée à la paire concernée.

3. Hacheur série selon la revendication 2, **caractérisé en ce que** L'impédance (Z_i) comporte une deuxième diode (Dd) en série avec une résistance (r) l'anode de la deuxième diode (Dd) étant reliée, dans le circuit du hacheur, à la cathode de la première diode (Sc_i) de chaque paire supplémentaire.

4. Hacheur série selon la revendication 2, **caractérisé en ce que** l'impédance (Z_i) comporte la deuxième diode (Dd) en série avec une diode zéner (Dz), les deux cathodes de la deuxième diode (Dd) et la diode zéner (Dz) étant reliées entre elles, l'anode de la deuxième diode (Dd) étant reliée, dans le circuit du hacheur, à la cathode de la première diode (Sc_i.)

5. Hacheur série selon l'une des revendications 1 à 4, **caractérisé en ce qu'**il ne comporte pas d'interconnexion entre les capacités d'un même niveau de potentiel, chacun des groupes de capacités d'entrée (Gin_i) ou de sortie (Gout_i) comportant respectivement une seule capacité (Cea_1, Cea_2 ;....Cea_i...... Ce_K) pour le groupe d'entrée (Gin_i) et (Csa_1, Csa_2 ;....Csa_i..... Csa_K.) pour les groupes de sortie (Gout_i) et **en ce que** la valeur de chacune de ces capacités d'entrée Ce_i se déduit par le calcul de la capacité résultante de
Ni = (K+1)-i capacités C en série, avec i=1, 2,....K, i étant l'ordre du groupe d'entrée considéré :

$$Cea\_1 = C/K \qquad i=1$$
$$Cea\_2 = C/(K-1) \qquad i=2$$
$$....$$
$$Cea\_i = C/((K+1)-i) \qquad i$$
$$.....$$
$$Cea\_K = C \qquad i=K$$

**en ce que** valeur de chacune de ces capacités de sortie Csa_i se déduit par le calcul de la capacité résultante de Mi=i capacités C en série, i étant l'ordre du groupe de sortie considéré :

$$Csa\_1= C \qquad i=1$$
$$Csa\_2 =C/2 \qquad i=2$$
$$....$$
$$Csa\_i = C/i \qquad i$$
$$.....$$
$$Csa\_K=C/K \qquad i=K$$

6. Hacheur série selon l'une des revendications 1 à 4, **caractérisé en ce qu'**il comporte des interconnexions entre les capacités d'un même niveau (Nv) de potentiel, la structure comportant un seul groupe de capacités d'entrée (Gin) et un seul groupe de capacités de sortie (Gout), la capacité d'entrée de chacun des niveaux de potentiel (Nin_i) en entrée, en parallèle avec sa respective paire supplémentaire d'interrupteurs (P_i) est déduite par le calcul de la capacité Ceb_i équivalente aux capacités en parallèle du niveau (Nin_i) considéré, soit :

$$Ceb\_1= C.K \qquad i=1$$
$$Ceb\_2 =C.(K-1) \qquad i=2$$
$$....$$
$$Ceb\_i = C.((K+1)-i) \qquad i$$
$$.....$$
$$Ceb\_K=C \qquad i=K$$

i étant l'ordre du niveau de potentiel considéré en entrée
**En ce que** la capacité de sortie de chacun des niveaux de potentiel en sortie (Nout_i), en parallèle entre deux paires supplémentaires consécutives (P_i, P_i-1) est déduite en calculant la capacité Csb_i équivalente aux capacités en parallèle du niveau (Nout_i) considéré, en sortie soit :

$$Csb\_1= C.K \qquad i=1$$
$$Csb\_2 =C.(K-1) \qquad i=2$$
$$....$$
$$Csb\_i = C.((K+1)-i) \qquad i$$
$$.....$$
$$Csb\_K=C \qquad i=K$$

i étant l'ordre du niveau de potentiel considéré en sortie.

7. Hacheur série selon l'une des revendications 1 à 4, **caractérisé en ce qu'**il comporte de combinaisons de capacités en parallèle pour certains groupes et en série pour d'autres.

8. Hacheur série selon l'une des revendications 1 à 7, **caractérisé en ce qu'**il comporte K transformateurs de récupération, le primaire de chaque transformateur (Tr_i) étant connecté entre les deux interrupteurs de chaque paire supplémentaire d'interrupteurs (P_i), le secondaire étant connecté d'un côté à la deuxième borne d'entrée et à la deuxième borne de sortie (B et D) du hacheur et de l'autre côté à la première borne d'entrée (A) à travers une diode zéner (Zb_i) dont la cathode se trouve connectée à ladite première borne d'entrée (A).

9. Hacheur série selon l'une des revendications 1 à 7, **caractérisé en ce qu'**il comporte K transformateurs de récupération, le primaire de chaque transformateur (Tr_i) étant connecté entre les deux interrupteurs de chaque paire supplémentaire d'interrupteurs (P_i), le secondaire étant connecté d'un côté à la deuxième borne d'entrée et à la deuxième borne de sortie (B et D) du hacheur et de l'autre coté à la charge (Rout) à travers une diode zéner (Zb_i) dont la cathode se trouve connectée à ladite charge, le transfert d'énergie emmagasinée dans la self, s'effectuant vers la charge (Rout).

10. Hacheur série selon l'une des revendications 1 à 9, **caractérisé en ce qu'**il comporte une diode (D) de retour de courant aux bornes du premier interrupteur (SB) de la première paire d'interrupteurs dont l'anode est connectée du côté de la deuxième borne d'entrée et la deuxième borne de sortie (B et D) et une capacité (Cout) de filtrage de sortie en parallèle sur la charge (Rout) entre les bornes de sortie (C et D).

11. Hacheur série selon l'une des revendications 1 à 10, **caractérisé en ce que** les premières diodes, de « roue libre », associées aux paires supplémentaires d'interrupteurs (Sc_1,...Sc_i), la diode (D) de retour de courant aux bornes du premier interrupteur de la première paire d'interrupteurs assurant la continuité de courant dans la self de sortie (Lout), et les diodes (Dd) des impédances associées à chaque paire supplémentaire d'interrupteurs (Z_i) sont des diodes au silicium.

12. Hacheur série selon l'une des revendications 1 à 9, **caractérisé en ce que** les premières diodes, de « roue libre », associées aux paires supplémentaires d'interrupteurs (Sc_1,...Sc_i), la diode (D) de retour de courant aux bornes du premier interrupteurs de la première paire d'interrupteurs assurant la continuité de courant dans la self de sortie (Lout), et les diodes (Dd) des impédances associées à chaque paire supplémentaire d'interrupteurs (Z_i) sont des diodes Schottky.

**Claims**

1. Buck converter comprising:

   - a pair of input terminals (A and B) with a first (A) and a second (B) input terminal for connecting an input DC voltage (Vin) across these two terminals, the potential of the first terminal (A) being higher than the potential of the second terminal (B);
   - a first pair (P_0) of switches (SB, SH) in series and connected to the second input terminal (B) by the first switch (SB), each switch (SB, SH) comprising a control input so that, simultaneously, one is set in a conducting state by the application of a first control signal at its control input, and the other in an isolating state by the application of a second control signal, complementary to the first control signal, at its control input;
   - a pair of output terminals (C and D) with a first (C) and a second (D) output terminal, for supplying a load (Rout) with an output voltage (Vout), the second output terminal (D) being connected to the second input terminal (B) and the first output terminal (C) to the connection point between the two switches of the first pair (SB and SH) in series via a filter inductor (Lout), **characterized in that** it comprises:
   - K other additional pairs (P_1, P_2,...P_i,..., P_K-1, P_K) of switches in series between the first input terminal (A) and a second switch (SH) of the first pair (P_0) of switches, the two switches of the same additional pair (P_i) being connected in series via an energy recovery inductor (Lr_i);
   - K input groups (Gin_1, Gin_2,...Gin_i,... Gin_K-1, Gin_K) of Ni capacitors (C) in series, each of the same value, with Ni = (K+1)-i and i = 1, 2, ...K-1, K, the electrode of the capacitors of one of the two ends of each input group (Gin_1, Gin_2,...Gin_i,... Gin_K-1, Gin_K) being connected to the first input terminal (A), at least the electrode of the capacitors of each of the other ends of the input groups (Gin_1, Gin_2,...Gin_i,...Gin_K-1, Gin_K) being connected to the connection point between two additional pairs of consecutive switches (P_(i-1) and P_i), respectively;
   - K output groups (Gout_1, Gout_2,...Gout_i,... Gout_K-1, Gout_K), of Mi capacitors (C) in series, each of the same value, with i = 1, 2, K and Mi = i, the electrode of the capacitors of one of the two ends of each output group (Gout_1, Gout_2,...Gout_i,...Gout_K-1, Gout_K) being connected to the common point between the two switches of the first pair (P_0), at least the electrode of the capacitors of each of the other ends of the output groups (Gout_1, Gout_2,...Gout_i,... Gout_K) being connected to the common point between each second switch of each additional pair of switches (SH_i) and the recovery inductor (Lr_i) of the corresponding pair (P_i) of the same rank (i), respectively,

   **in that** the switches of these other K additional pairs are simultaneously controlled by the first and second complementary control signals forming, when the first switch (SB) of the first pair (P_0) connected to the second input terminal (B) is set in the conducting state for a time Toff, a first network of capacitors connected between the input terminals, comprising the groups of input capacitors in series with the groups of output capacitors such that a group of input capacitors (Gin_i) is in series, via its respective energy recovery inductor (Lr_i), with its respective group of output capacitors (Gout_i),
   and **in that**, when the first switch (SB) of the first pair (P_0) connected to the second input terminal (B) is set in the isolating state, the second switch (SH) being set in the conducting state, for a time Ton, these other K additional pairs of switches form a second network of capacitors, connected between the first input terminal (A) and the output filter inductor (Lout), comprising the first group of input capacitors (Gin_1) in parallel with the last group of output capacitors (Gout_K), in parallel with input capacitor groups in series with output capacitor groups such that an input capacitor group (Gin_i) is in series with an output capacitor group (Gout_(i-1)).

2. Buck converter according to Claim 1, **characterized in that** each additional pair of switches (P_i) of the converter comprises, in parallel, a first diode (Sc_i) in series with an associated impedance (Z_i), the anode of the diode (Sc_i) being connected to the connection point between the pair in question (P_i) and the lower pair (P_i-1), the common point between the cathode of the diode (Sc_i) and the associated impedance (Z_i) being connected to the common point between the first switch of the pair in question (SB_i) and the recovery inductor (Lr_i) associated with the pair in question.

3. Buck converter according to Claim 2, **characterized in that** the impedance (Z_i) comprises a second diode (Dd) in series with a resistor (r), the anode of the second diode (Dd) being connected, in the converter circuit, to the cathode of the first diode (Sc_i) of each additional pair.

4. Buck converter according to Claim 2, **characterized in that** the impedance (Z_i) comprises the second diode (Dd) in series with a zener diode (Dz), the two cathodes of the second diode (Dd) and the zener diode (Dz) being connected together, the anode of the second diode (Dd) being connected, in the converter circuit, to the cathode of the first diode (Sc_i).

5. Buck converter according to one of Claims 1 to 4, **characterized in that** it does not comprise interconnections between the capacitors of the same potential level, each of the input capacitor groups (Gin_i) or output capacitor groups (Gout_i) respectively comprising a single capacitance (Cea_1, Cea_2;...Cea_i...Ce_K) for the input group (Gin_i) and (Csa_1, Csa_2; ...Csa_i...Csa_K) for the output groups (Gout_i), and **in that** the value of each of these input capacitances Ce_i can be deduced by the calculation of the resultant capacitance of
Ni = (K+1)-i capacitors C in series, with i = 1, 2,...K, i being the order of the input group in question:

$$\text{Cea\_1} = C/K \qquad i = 1$$
$$\text{Cea\_2} = C/(K-1) \qquad i = 2$$
$$....$$
$$\text{Cea\_i} = C/((K+1)-i) \qquad i$$
$$.....$$
$$\text{Cea\_K} = C \qquad i = K$$

**in that** value of each of these output capacitances Csa_i can be deduced by the calculation of the resultant capacitance of Mi = i capacitors C in series, i being the order of the output group in question:

$$\text{Csa\_1} = C \qquad i = 1$$
$$\text{Csa\_2} = C/2 \qquad i = 2$$
$$....$$
$$\text{Csa\_i} = C/i \qquad i$$
$$.....$$
$$\text{Csa\_K} = C/K \qquad i = K$$

6. Buck converter according to one of Claims 1 to 4, **characterized in that** it comprises interconnections between the capacitors of the same potential level (Nv), the structure comprising a single input capacitor group (Gin) and a single output capacitor group (Gout), the input capacitance of each of the potential levels (Nin_i) at the input, in parallel with its respective additional pair of switches (P_i), is deduced by calculating the capacitance Ceb_i equivalent to the capacitors in parallel of the level (Nin_i) in question, which is:

$$\text{Ceb\_1} = C.K \qquad i = 1$$
$$\text{Ceb\_2} = C.(K-1) \qquad i = 2$$
$$....$$
$$\text{Ceb\_i} = C.((K+1)-i) \qquad i$$

(continued)

$$\begin{array}{ll} ..... \\ Ceb\_K = C & i = K \end{array}$$

i being the order of the input potential level in question,
**in that** the output capacitance of each of the output potential levels (Nout_i), in parallel between two consecutive additional pairs (P_i, P_i-1), is deduced by calculating the capacitance Csb_i equivalent to the capacitors in parallel of the output level (Nout_i) in question, which is:

$$\begin{array}{ll} Csb\_1 = C.K & i = 1 \\ Csb\_2 = C.(K-1) & i = 2 \\ .... \\ Csb\_i = C.((K+1)-i) & i \\ ..... \\ Csb\_K = C & i = K \end{array}$$

i being the order of the output potential level in question.

7. Buck converter according to one of Claims 1 to 4, **characterized in that** it comprises combinations of capacitors in parallel for certain groups and in series for others.

8. Buck converter according to one of Claims 1 to 7, **characterized in that** it comprises K recovery transformers, the primary of each transformer (Tr_i) being connected between the two switches of each additional pair of switches (P_i), the secondary being connected, at one end, to the second input terminal and to the second output terminal (B and D) of the converter and, at the other end, to the first input terminal (A) via a zener diode (Zb_i) whose cathode is connected to said first input terminal (A).

9. Buck converter according to one of Claims 1 to 7, **characterized in that** it comprises K recovery transformers, the primary of each transformer (Tr_i) being connected between the two switches of each additional pair of switches (P_i), the secondary being connected, at one end, to the second input terminal and to the second output terminal (B and D) of the converter and, at the other end, to the load (Rout) via a zener diode (Zb_i) whose cathode is connected to said load, the transfer of energy stored in the inductor occurring toward the load (Rout).

10. Buck converter according to one of Claims 1 to 9, **characterized in that** it comprises a current return diode (D) across the terminals of the first switch (SB) of the first pair of switches whose anode is connected on the side of the second input terminal and the second output terminal (B and D), and an output filter capacitor (Cout) in parallel with the load (Rout) between the output terminals (C and D).

11. Buck converter according to one of Claims 1 to 10, **characterized in that** the 'flywheel' first diodes (Sc_1,...Sc_i) associated with the additional pairs of switches, the current return diode (D) across the terminals of the first switch of the first pair of switches ensuring the current continuity in the output inductor (Lout) and the diodes (Dd) of the impedances (Z_i) associated with each additional pair of switches are silicon diodes.

12. Buck converter according to one of Claims 1 to 9, **characterized in that** the 'flywheel' first diodes (Sc_1,...Sc_i) associated with the additional pairs of switches, the current return diode (D) across the terminals of the first switch of the first pair of switches ensuring the current continuity in the output inductor (Lout) and the diodes (Dd) of the impedances (Z_i) associated with each additional pair of switches are Schottky diodes.

**Patentansprüche**

1. Serien-Zerhacker, der aufweist:

   - ein Paar von Eingangsklemmen (A und B) mit einer ersten (A) und einer zweiten (B) Eingangsklemme, um eine Eingangsgleichspannung (Vin) zwischen diesen beiden Klemmen anzuschließen, wobei das Potential der ersten Klemme (A) höher ist als das Potential der zweiten Klemme (B);

- ein erstes Paar (P_0) von Unterbrechern (SB, SH) in Reihenschaltung, das vom ersten Unterbrecher (SB) mit der zweiten Eingangsklemme (B) verbunden wird, wobei jeder Unterbrecher (SB, SH) einen Steuereingang aufweist, um gleichzeitig, der eine in einen leitenden Zustand durch das Anlegen eines ersten Steuersignals an seinen Steuereingang, der zweite in einen isolierten Zustand durch das Anlegen eines zweiten Steuersignals komplementär zum ersten an seinen Steuereingang, gebracht zu werden;
- ein Paar von Ausgangsklemmen (C und D) mit einer ersten (C) und einer zweiten (D) Ausgangsklemme, um eine Last (Rout) mit einer Ausgangsspannung (Vout) zu speisen, wobei die zweite Ausgangsklemme (D) mit der zweiten Eingangsklemme (B) und die erste Ausgangsklemme (C) mit dem Verbindungspunkt zwischen den zwei Unterbrechern des ersten Paars (SB und SH) in Reihenschaltung über eine Filterdrosselspule (Lout) verbunden ist,

**dadurch gekennzeichnet, dass** er aufweist:

- K weitere zusätzliche Paare (P_1, P_2, ..., P_i, ..., P_K-1, P_K) von Unterbrechern in Reihenschaltung zwischen der ersten Eingangsklemme (A) und einem zweiten Unterbrecher (SH) des ersten Paars (P_0), wobei die zwei Unterbrecher des gleichen zusätzlichen Paars (P_1) in Reihenschaltung über eine Energierückgewinnungs-Drosselspule (Lr_i) verbunden sind;
- K Eingangsgruppen (Gin_1, Gin_2, ..., Gin_i, ..., Gin_K-1, Gin_K) von Ni Kondensatoren (C) gleichen Werts in Reihenschaltung, mit Ni = (K+1)-i und i=1, 2, ..., K-1, K, wobei die Elektrode der Kondensatoren eines der zwei Enden jeder Eingangsgruppe (Gin_1, Gin_2, ..., Gin_i, ..., Gin_K-1, Gin_K) mit der ersten Eingangsklemme (A) verbunden ist, wobei mindestens die Elektrode der Kondensatoren jedes der anderen Enden der Eingangsgruppen (Gin_1, Gin_2, ..., Gin_i, ..., Gin_K-1, Gin_K) je mit dem Verbindungspunkt zwischen zwei zusätzlichen Paaren von aufeinanderfolgenden Unterbrechern (P_(i-1) und P_i) verbunden ist;
- K Ausgangsgruppen (Gout_1, Gout_2, ..., Gout_i, ..., Gout_K-1, Gout_K) von Mi Kondensatoren (C) gleichen Werts in Reihenschaltung, mit i = 1, 2, K und Mi=i, wobei die Elektrode der Kondensatoren eines der zwei Enden jeder Ausgangsgruppe (Gout_1, Gout_2, ..., Gout_i, ..., Gout_K-1, Gout_K) mit dem gemeinsamen Punkt zwischen den zwei Unterbrechern des ersten Paars (P_0) verbunden ist, wobei mindestens die Elektrode der Kondensatoren jedes der anderen Enden der Ausgangsgruppen (Gout_1, Gout_2, ..., Gout_i, ..., Gout_K) je mit dem gemeinsamen Punkt zwischen jedem zweiten Unterbrecher (SH_i) und der Wiedergewinnungs-Drosselspule jedes zusätzlichen Paars von Unterbrechern (Lr_i) des entsprechenden Paars (P_i) gleichen Rangs (i) verbunden ist,

dass die Unterbrecher dieser anderen K zusätzlichen Paare gleichzeitig von den ersten und zweiten komplementären Steuersignalen gesteuert werden, die, wenn der erste Unterbrecher (SB) des ersten Paars (P_0), der mit der zweiten Eingangsklemme (B) verbunden ist, während einer Zeit Toff in den leitenden Zustand gesteuert wird, ein erstes Netz von Kondensatoren bilden, das zwischen den Eingangsklemmen verbunden ist, die die Gruppen von Eingangskondensatoren in Reihenschaltung mit den Gruppen von Ausgangskondensatoren aufweisen, derart, dass eine Gruppe von Eingangskondensatoren (Gin_i) über seine Energiewiedergewinnungs-Drosselspule (Lr_i), mit seiner Gruppe von Ausgangskondensatoren (Gout_i) in Reihe geschaltet ist,

und dass, wenn der erste Unterbrecher (SB) des ersten Paars (P_0), der mit der zweiten Eingangsklemme (B) verbunden ist, während einer Zeit Ton in den isolierten Zustand gesteuert wird, während der zweite Unterbrecher (SH) in den leitenden Zustand gesteuert wird, diese anderen K Paare von zusätzlichen Unterbrechern ein zweites Netz von Kondensatoren bilden, das zwischen der ersten Eingangsklemme (A) und der Ausgangs-Filterdrosselspule (Lout) verbunden ist, die die erste Gruppe von Eingangskondensatoren (Gin_1) in Parallelschaltung mit der letzten Gruppe von Ausgangskondensatoren (Gout_K) in Parallelschaltung mit Eingangskondensatorgruppen in Reihe mit Ausgangskondensatorgruppen aufweist, derart, dass eine Gruppe von Eingangskondensatoren (Gin_i) mit einer Gruppe von Ausgangskondensatoren (Gout_(i-1)) in Reihe geschaltet ist.

2. Serien-Zerhacker nach Anspruch 1, **dadurch gekennzeichnet, dass** jedes zusätzliche Paar von Unterbrechern (P_i) des Zerhackers in Parallelschaltung eine erste Diode (Sc_i) in Reihe mit einer zugehörigen Impedanz (Z_i) aufweist, wobei die Anode der Diode (Sc_i) mit dem Verbindungspunkt zwischen dem betroffenen Paar (P_i) und dem unteren Paar (P_i-1) verbunden ist, wobei der gemeinsame Punkt zwischen der Kathode der Diode (Sc_i) und der zugeordneten Impedanz (Z_i) mit dem gemeinsamen Punkt zwischen dem ersten Unterbrecher des betroffenen Paars (SB_i) und der dem betroffenen Paar zugeordneten Wiedergewinnungs-Drosselspule (Lr_i) verbunden ist.

3. Serien-Zerhacker nach Anspruch 2, **dadurch gekennzeichnet, dass** die Impedanz (Z_i) eine zweite Diode (Dd) in Reihenschaltung mit einem Widerstand (r) aufweist, wobei die Anode der zweiten Diode (Dd) in der Schaltung des Zerhackers mit der Kathode der ersten Diode (Sc_i) jedes zusätzlichen Paars verbunden ist.

4. Serien-Zerhacker nach Anspruch 2, **dadurch gekennzeichnet, dass** die Impedanz ($Z\_i$) die zweite Diode ($Dd$) in Reihe mit einer Zener-Diode ($Dz$) aufweist, wobei die zwei Kathoden der zweiten Diode ($Dd$) und der Zener-Diode ($Dz$) miteinander verbunden sind, wobei die Anode der zweiten Diode ($Dd$) in der Schaltung des Zerhackers mit der Kathode der ersten Diode ($Sc\_i$) verbunden ist.

5. Serien-Zerhacker nach einem der Ansprüche 1 bis 4, **dadurch gekennzeichnet, dass** er keine Verbindung zwischen den Kondensatoren der gleichen Potentialebene aufweist, wobei jede der Gruppen von Eingangs- ($Gin\_i$) oder Ausgangskondensatoren ($Gout\_i$) je einen einzigen Kondensator ($Cea\_1$, $Cea\_2$, ..., $Cea\_i$, ..., $Ce\_K$) für die Eingangsgruppe ($Gin\_i$) und ($Csa\_1$, $Csa\_2$, ..., $Csa\_i$, ..., $Csa\_K$) für die Ausgangsgruppen ($Gout\_i$) aufweist, und dass der Wert jedes dieser Eingangskondensatoren $Ce\_i$ sich durch die Berechnung der aus $Ni = (K+1)-i$ Kondensatoren C in Reihenschaltung resultierenden Kapazität ableitet, mit $1=1, 2, ..., K$, wobei i die Ordnung der betrachteten Eingangsgruppe ist:

$$\begin{aligned} Cea\_1 &= C/K & i&=1 \\ Cea\_2 &= C/(K-1) & i&=2 \\ &... \\ Cea\_i &= C/((K+1)-i) & i& \\ &... \\ Cea\_K &= C & i&=K \end{aligned}$$

dass der Wert jedes dieser Ausgangskondensatoren $Csa\_i$ sich durch die Berechnung der aus $Mi=i$ Kondensatoren C in Reihenschaltung resultierenden Kapazität ableitet, wobei i die Ordnung der betrachteten Ausgangsgruppe ist:

$$\begin{aligned} Csa\_1 &= C & i&=1 \\ Csa\_2 &= C/2 & i&=2 \\ &... \\ Csa\_i &= C/i & i& \\ &... \\ Csa\_K &= C/K & i&=K \end{aligned}$$

6. Serien-Zerhacker nach einem der Ansprüche 1 bis 4, **dadurch gekennzeichnet, dass** er Verbindungen zwischen den Kondensatoren der gleichen Potentialebene ($Nv$) aufweist, wobei die Struktur eine einzige Gruppe von Eingangskondensatoren ($Gin$) und eine einzige Gruppe von Ausgangskondensatoren ($Gout$) aufweist, wobei der Eingangskondensator jeder der Potentialebenen ($Nin\_i$) am Eingang mit ihrem jeweiligen zusätzlichen Paar von Unterbrechern ($P\_i$) in Parallelschaltung durch die Berechnung der Kapazität $Ceb\_i$ äquivalent zu den parallelgeschalteten Kondensatoren der betrachteten Ebene ($Nin\_i$) abgeleitet wird, d.h.:

$$\begin{aligned} Ceb\_1 &= C.K & i&=1 \\ Ceb\_2 &= C.(K-1) & i&=2 \\ &... \\ Ceb\_i &= C.((K+1)-i) & i& \\ &... \\ Ceb\_K &= C & i&=K \end{aligned}$$

wobei i die Ordnung der betrachteten Potentialebene am Eingang ist,
dass der Ausgangskondensator jeder der Potentialebenen am Ausgang ($Nout\_i$) in Parallelschaltung zwischen zwei aufeinanderfolgenden zusätzlichen Paaren ($P\_i$, $P\_i-1$) abgeleitet wird durch Berechnung der Kapazität $Csb\_i$ äquivalent zu den parallelgeschalteten Kondensatoren der betrachteten Ebene ($Nout\_i$) am Ausgang, d.h.:

$$\begin{aligned} Csb\_1 &= C.K & i&=1 \\ Csb\_2 &= C.(K-1) & i&=2 \\ &... \\ Csb\_i &= C.((K+I)-i) & i& \end{aligned}$$

(fortgesetzt)

...

Csb_K=C             i=k

wobei i die Ordnung der betrachteten Potentialebene am Ausgang ist.

7.  Serien-Zerhacker nach einem der Ansprüche 1 bis 4, **dadurch gekennzeichnet, dass** er Kombinationen von Kondensatoren in Parallelschaltung für bestimmte Gruppen und in Reihenschaltung für andere aufweist.

8.  Serien-Zerhacker nach einem der Ansprüche 1 bis 7, **dadurch gekennzeichnet, dass** er K Wiedergewinnungstransformatoren aufweist, wobei die Primärwicklung jedes Transformators (Tr_i) zwischen den zwei Unterbrechern jedes zusätzlichen Paars von Unterbrechern (P_i) verbunden ist, während die Sekundärwicklung einerseits mit der zweiten Eingangsklemme und mit der zweiten Ausgangsklemme (B und D) des Zerhackers und andererseits mit der ersten Eingangsklemme (A) über eine Zener-Diode (Zb_i) verbunden ist, deren Kathode mit der ersten Eingangsklemme (A) verbunden ist.

9.  Serien-Zerhacker nach einem der Ansprüche 1 bis 7, **dadurch gekennzeichnet, dass** er K Wiedergewinnungstransformatoren aufweist, wobei die Primärwicklung jedes Transformators (TR_i) zwischen den zwei Unterbrechern jedes zusätzlichen Paars von Unterbrechern (P_i) verbunden ist, während die Sekundärwicklung einerseits mit der zweiten Eingangsklemme und mit der zweiten Ausgangsklemme (B und D) des Zerhackers und andererseits mit der Last (Rout) über eine Zener-Diode (Zb_i) verbunden ist, deren Kathode mit der Last verbunden ist, wobei der Transfer der in der Drosselspule gespeicherten Energie zur Last (Rout) erfolgt.

10. Serien-Zerhacker nach einem der Ansprüche 1 bis 9, **dadurch gekennzeichnet, dass** er eine Diode (D) der Stromrückkehr zu den Klemmen des ersten Unterbrechers (SB) der zweiten Eingangsklemme und der zweiten Ausgangsklemme aufweist, deren Anode auf der Seite des ersten Paars von Unterbrechern (B und D) verbunden ist, und einen Ausgangsfilterungs-Kondensator (Cout) in Parallelschaltung auf der Last (Rout) zwischen den Ausgangsklemmen (C und D) aufweist.

11. Serien-Zerhacker nach einem der Ansprüche 1 bis 10, **dadurch gekennzeichnet, dass** die ersten "Freilauf"-Dioden, die den zusätzlichen Paaren von Unterbrechern (Sc_1, ..., Sc_i) zugeordnet sind, die Diode (D) der Stromrückkehr zu dem Klemmen des ersten Unterbrechers des ersten Paars von Unterbrechern, die die Stromkontinuität in der Ausgangsdrosselspule (Lout) gewährleistet, und die Dioden (Dd) der Impedanzen, die jedem zusätzlichen Paar von Unterbrechern (Z_i) zugeordnet sind, Siliciumdioden sind.

12. Serien-Zerhacker nach einem der Ansprüche 1 bis 9, **dadurch gekennzeichnet, dass** die ersten "Freilauf"-Dioden, die den zusätzlichen Paaren von Unterbrechern (Sc_1, ..., Sc_i) zugeordnet sind, wobei die Diode (D) der Stromrückkehr zu den Klemmen des ersten Unterbrechers des ersten Paars von Unterbrechern die Stromkontinuität in der Ausgangsdrosselspule (Lout) gewährleistet, und die Dioden (Dd) der Impedanzen, die jedem zusätzlichen Paar von Unterbrechern (Z_i) zugeordnet sind, Schottky-Dioden sind.

FIG.1a

FIG.1b

FIG.1c

FIG.1d

FIG.1e

FIG.2

FIG.3

FIG.4

FIG.5

FIG.6

FIG.7

FIG.8

FIG.9a

FIG.9b

FIG.9c

FIG.10

FIG.11

FIG.12

FIG.13

FIG.14

FIG.15

**FIG.16**

FIG.17